# EUROPEAN PATENT APPLICATION

(11) **EP 4 836 091 A1**
(43) Date of publication of application: **04.11.2026**
(21) Application number: 24914884.2
(22) Date of filing: 11.09.2024
(51) Int. Cl.: H01M 10/6554, H01M 10/6556, H01M 10/625

(54) **THERMAL MANAGEMENT ASSEMBLY, BATTERY BOX, BATTERY AND ELECTRIC DEVICE**

(30) Priority: 03.01.2024 CN 202410009949
(71) Applicant: Contemporary Amperex Technology Co., Limited, Ningde, Fujian 352100 (CN)
(72) Inventor: LIAO, Boxiang, Ningde, Fujian 352100 (CN); QIN, Feng, Ningde, Fujian 352100 (CN); CHEN, Binbin, Ningde, Fujian 352100 (CN); LI, Jie, Ningde, Fujian 352100 (CN)
(74) Representative: Ziebig Hengelhaupt Intellectual Property Attorneys Patentanwaltskanzlei PartGmbB
(86) International application number: PCT/CN2024/118345
(87) International publication number: WO 2025/145662

(57) **Abstract**

Embodiments of the present disclosure provide a thermal management assembly (10), a battery box, a battery (100), and an electric device. The thermal management assembly (10) includes a flow channel plate (11), an energy absorption member (13), and multiple current collectors (12). The flow channel plate (11) is configured to convey fluid to exchange heat with the battery cell (30). The current collectors (12) are connected to the flow channel plate (11). The energy absorption member (13) is provided on a side of the current collector (12) facing away from the flow channel plate (11), where the energy absorption member (13) includes a force bearing portion (131) and a deformation portion (132), the force bearing portion (131) is located at an end of the deformation portion (132) away from the current collector (12), and a rigidity of the deformation portion (132) is less than a rigidity of the force bearing portion (131).

## Description

### CROSS-REFERENCE TO RELATED APPLICATIONS

This disclosure is based on and claims priority to the Chinese Patent Application No. 202410009949.1, filed on January 3, 2024 and entitled "THERMAL MANAGEMENT ASSEMBLY, BATTERY BOX, BATTERY AND ELECTRIC DEVICE", which is incorporated herein by reference in its entirety.

### TECHNICAL FIELD

Embodiments of the present disclosure relate to the field of battery technology, and specifically, to a thermal management assembly, a battery box, a battery, and an electric device.

### BACKGROUND

Currently, in the context of increasing energy shortage and growing environmental protection challenges, new energy vehicles have become a hot topic.

A battery is a core component of new energy vehicles. During the operation of the battery, the heat generated by a battery cell in the battery and the temperature changes in the external environment cause changes in the temperature of the battery cell, thereby having a significant impact on the charge-discharge performance and service life of the battery cell. Therefore, a thermal management assembly is provided in the battery to regulate the temperature of the battery cell, so as to achieve thermal management of the battery.

During the driving of the new energy vehicle, the thermal management assembly may be damaged due to collision with obstacles, thereby posing a risk of thermal runaway for the battery.

### SUMMARY

In view of this, embodiments of the present disclosure provide a thermal management assembly, a battery box, a battery, and an electric device that can increase a probability of normal operation of a thermal management function after a collision.

To achieve the above objective, the technical solutions of the embodiments of the present disclosure are implemented as follows.

Embodiments of the present disclosure provide a thermal management assembly, configured for thermal management of a battery cell, where the thermal management assembly includes:
a flow channel plate, configured to convey fluid to exchange heat with the battery cell;
multiple current collectors, where the current collectors are connected to the flow channel plate; and
an energy absorption member, provided on a side of the current collector facing away from the flow channel plate, the energy absorption member includes a force bearing portion and a deformation portion, the force bearing portion is located at an end of the deformation portion away from the current collector, and a rigidity of the deformation portion is less than a rigidity of the force bearing portion.

In the thermal management assembly in the embodiments of the present disclosure, the energy absorption member is provided on the current collector. In this case, during collision between the thermal management assembly and another component from the side of the current collector facing away from the flow channel plate, since the energy absorption member is more likely to contact the collision object, the energy absorption member can first absorb the collision energy through its own deformation, thereby effectively reducing the collision energy transmitted to the current collector and the flow channel plate, reducing the probability that the thermal management function of the thermal management assembly fails due to damage to the flow channel plate, the current collector, and their connection position during the collision, and thereby indirectly reducing the probability of thermal runaway of the battery cell, helping improve the safety of the battery.

In some embodiments, the deformation portion and the force bearing portion are made of a same material, and in cross-sections of the energy absorption member perpendicular to an extension direction of the energy absorption member, a cross-section with a smallest area is located in the deformation portion. This simplifies the manufacturing process of the deformation portion and the force bearing portion.

In some embodiments, the energy absorption member and the current collector are integrated. This helps simplify the processing and manufacturing process of the thermal management assembly, reduce assembly steps, and lower production costs. Further, this helps reduce the probability that after an impact, fracture between the energy absorption member and the current collector leads to a decline in the energy absorption effect of the energy-absorbing member for impact energy.

In some embodiments, the current collector is located at an end of the flow channel plate along a length direction of the flow channel plate, and an end of the force bearing portion away from the current collector protrudes beyond an end of the current collector away from the flow channel plate along a direction away from the flow channel plate.

In this way, in the case that an impact direction is along the length direction of the flow channel plate, the force bearing portion is more likely to be impacted before the current collector, and then the energy absorption member deforms, thereby better reducing the collision energy transmitted to the current collector and the flow channel plate, and providing protection for the current collector and the flow channel plate.

In some embodiments, an end of the force bearing portion away from the deformation portion is arc-shaped.

In this way, in the case that the force bearing portion is impacted, the probability of stress concentration at the end of the force bearing portion is reduced, reducing the probability that the force bearing portion is damaged due to stress concentration, leading to movement inability and thus inability to deform the deformation portion to absorb more collision energy; further, the arc shape leads to a component force of the impact force, thereby guiding the force bearing portion to deflect relative to the deformation portion in a preset direction, such that the energy absorption member better absorbs the collision energy.

In some embodiments, the energy absorption member includes a connection portion, the connection portion is located at an end of the deformation portion close to the current collector and connected to the current collector, the rigidity of the deformation portion is less than a rigidity of the connection portion, and an extension direction of the connection portion intersects an extension direction of the force bearing portion.

In this way, in the case that the force bearing portion is impacted, deflection of the force bearing portion relative to the connection portion is facilitated, and the force bearing portion does not translate directly toward the connection portion, facilitating bending and deformation of the energy absorption member, further facilitating absorption of more impact energy.

In some embodiments, the connection portion extends in a direction away from the flow channel plate; an extension direction of the connection portion is inclined relative to the length direction of the flow channel plate, such that a first included angle is formed between a side of the connection portion and the current collector, and a second included angle is formed between another side and the current collector; the first included angle is greater than the second included angle; and the force bearing portion is located on a side of the connection portion close to the first included angle.

In this way, setting the first included angle to be greater than the second included angle enables the force bearing portion to deflect in a larger angle, thereby allowing absorption of more collision energy through the deflection of the force bearing portion.

In some embodiments, the first included angle is not less than 90°, such that the force bearing portion can deflect in a larger angle, thereby allowing the deflection of force bearing portion to absorb more collision energy;
and/or the second included angle is not less than 30°, to improve a structural rigidity of the connection position between the connection portion and the current collector, reducing the probability that deformation at the connection position between the connection portion and the current collector leads to squeezing and damage of the current collector after the energy absorption member is impacted.

In some embodiments, a side surface of an end of the force bearing portion close to the deformation portion facing the second included angle, a side surface of the deformation portion facing the second included angle, and a side surface of the connection portion facing the second included angle are in a same plane.

In this way, in a case that the force bearing portion is impacted, tendency of the force bearing portion to deform and deflect toward a side of the second included angle is suppressed, while the force bearing portion is more likely to deform and deflect toward a side of the first included angle, thereby guiding a deflection direction of the force bearing portion.

In some embodiments, a third included angle formed between the force bearing portion and the connection portion is an obtuse angle. This allows the force bearing portion to have a larger range for deflection and deformation, thereby absorbing more collision energy.

In some embodiments, the flow channel plate extends straight, at least one of the current collectors is provided at each of two ends of the flow channel plate along the length direction of the flow channel plate, and at least one of at least two current collectors corresponding to the flow channel plate is provided with the energy absorption member, such that in a case that the thermal management assembly is impacted in two directions of an extension direction of the flow channel plate, at least part of the impact can be absorbed through the energy absorption member, thereby protecting the current collector and the energy absorption member;
or the flow channel plate extends in a curve, at least one of the current collectors is provided at each of two ends of the flow channel plate along the extension direction of the flow channel plate, and at least one of at least two current collectors corresponding to the flow channel plate is provided with the energy absorption member, such that the extension direction of the flow channel plate better adapts to an arrangement of other components in the battery.

Embodiments of the present disclosure further provide a battery box, configured to accommodate a battery cell, where the battery box includes a box body and the thermal management assembly according to any of the above embodiments, an accommodation space is provided in the box body, the accommodation space is configured to accommodate the battery cell and the thermal management assembly, the current collectors are located at two ends of the flow channel plate along a first direction, and an inner wall of the accommodation space along the first direction is spaced apart from the force bearing portion.

In this way, a buffer space is formed between the inner wall of the accommodation space along the first direction and the energy absorption member. In this way, in an impact, the box body needs to deform to a certain degree before colliding with the energy absorption member, and the deformation of the box body absorbs collision energy, thereby reducing the collision energy transmitted to the energy absorption member, further reducing the collision energy transmitted to the current collector, reducing the probability that the current collector is damaged due to collision. Further, direct transmission of vibrations under normal operation of the box body to the energy absorption member through contact is avoided, reducing the probability of noise caused by vibration collision between the two, avoiding a situation where energy from vibration is transmitted to the deformation portion and leads to deformation of the energy absorption member, which reduces the collision energy absorbed by the energy absorption member.

In some embodiments, a part of the inner wall of the accommodation space along the first direction protrudes to form a reinforcing protrusion, the energy absorption member is located on a side of the current collector close to the reinforcing protrusion, and the force bearing portion is located at an end of the deformation portion close to the reinforcing protrusion.

In this way, in the case of a collision, the energy absorption member contacts the reinforcing protrusion before the current collector and absorbs collision energy, thereby reducing the probability that contact between the reinforcing protrusion and the current collector causes damage to the current collector.

In some embodiments, in a projection plane perpendicular to the first direction, at least part of a projection of the force bearing portion is within a projection range of the reinforcing protrusion.

In this way, in a process where the box body is impacted and the reinforcing protrusion intrudes into the accommodation space along the first direction, the force bearing portion may contact the reinforcing protrusion, thereby absorbing collision energy through deformation of the deformation portion.

In some embodiments, the battery box further includes an elastic conductive member, the elastic conductive member is sandwiched between the inner wall of the accommodation space and the energy absorption member, and the elastic conductive member is elastically deformable along the first direction.

The elastic conductive member is elastic and conductive. Due to the conductivity, the thermal management assembly and the box body are maintained at the same potential, facilitating insulation tests on the battery. Due to the elasticity, contact between the box body, the elastic conductive member, and the thermal management assembly is maintained, such that in environments such as vibration, the thermal management assembly and the box body can maintain the same potential.

In some embodiments, multiple thermal management assemblies are provided, all flow channel plates of the thermal management assemblies are arranged side by side, the flow channel plate has a first end, first ends are located at a same end of all the flow channel plates, the first end of each flow channel plate is provided with at least one current collector, and at least one of at least one current collector corresponding to the first end of the flow channel plate is provided with an energy absorption member.

In this way, based on the arrangement of other components in the battery box, the energy absorption members in the thermal management assemblies are oriented toward directions where they are more likely to be impacted or directions where the box body have relatively weak structures.

In some embodiments, the flow channel plate has a second end, the second end is located at another end of each of the flow channel plates of the thermal management assemblies, the second end of each flow channel plate is provided with at least one current collector, and at least one of at least one current collector corresponding to the second end of the flow channel plate is provided with an energy absorption member.

In this way, energy absorption members in the thermal management assemblies are oriented toward multiple directions where they are more likely to be impacted or multiple directions where the box body has relatively weak structures.

An embodiment of the present disclosure further provides a battery, where the battery includes the battery box in any of the foregoing embodiments and a battery cell, where the battery cell is disposed in the accommodation space and attached to the flow channel plate, such that fluid flowing in the flow channel plate can exchange heat with the battery cell, thereby maintaining a temperature of the battery cell within an appropriate temperature range.

An embodiment of the present disclosure further provides an electric device, where the electric device includes the battery in the foregoing embodiment, and the battery is configured as a power source for the electric device.

In this way, provision of the energy absorption member can reduce the probability of damage to the current collector and the flow channel plate in a collision of the electric device.

### BRIEF DESCRIPTION OF DRAWINGS

FIG. 1 is a schematic diagram where an electric device is a vehicle according to an embodiment of the present disclosure;
FIG. 2 is a schematic diagram of a thermal management assembly according to an embodiment of the present disclosure;
FIG. 3 is a schematic enlarged view of position A in FIG. 2;
FIG. 4 is a schematic diagram of a thermal management assembly according to another embodiment of the present disclosure;
FIG. 5 is a schematic enlarged view of position B in FIG. 3;
FIG. 6 is a schematic diagram of a thermal management assembly according to still another embodiment of the present disclosure;
FIG. 7 is a schematic diagram of a battery according to an embodiment of the present disclosure;
FIG. 8 is a schematic enlarged view of position C in FIG. 7;
FIG. 9 is a schematic diagram of the battery in the embodiment in FIG. 7 from another perspective;
FIG. 10 is a schematic cross-sectional diagram of position D-D in FIG. 9;
FIG. 11 is a schematic enlarged view of position E in FIG. 10; and
FIG. 12 is a schematic enlarged view of position F in FIG. 10.

### Reference sign description:

1000. vehicle; 100. battery; 200. controller; 300. motor;
10. thermal management assembly; 11. flow channel plate; 12. current collector; 13. energy absorption member; 13a. first included angle; 13b. second included angle; 13c. third included angle; 131. force bearing portion; 132. deformation portion; 133. connection portion; 20. box body; 20a. accommodation space; 21. side beam; 211. reinforcing protrusion; 22. end beam; 30. battery cell; and 40. elastic conductive member.

### DESCRIPTION OF EMBODIMENTS

It should be noted that, in the absence of conflicts, embodiments and technical features in the embodiments of the present disclosure can be combined with each other, and the detailed description of the specific embodiments should be understood as explanatory description of the purpose of the present disclosure and should not be regarded as an improper limitation on the present disclosure.

Unless otherwise defined, all technical and scientific terms used herein have the same meaning as commonly understood by those skilled in the art to which this disclosure pertains; the terms used herein are for the purpose of describing specific embodiments only and are not intended to limit the present disclosure; the terms "include" and "have" and any variations thereof in the specification of the present disclosure and the above description of the drawings are intended to cover non-exclusive inclusions.

In the description of embodiments of the present disclosure, technical terms such as "first", "second", and "third" are used only to distinguish different objects and should not be understood as indications or implications of relative importance or implicit indication of a quantity, specific order, or primary-secondary relationship of the indicated technical features. In the description of embodiments of the present disclosure, "multiple" means two or more, unless otherwise clearly and specifically limited.

As used herein, "an embodiment" means that a particular feature, structure, or characteristic described with reference to the embodiment may be included in at least one embodiment of the present disclosure. The phrase in various places in the specification does not necessarily refer to the same embodiment, nor is it an independent or alternative embodiment that is mutually exclusive from other embodiments. It is expressly and implicitly understood by those skilled in the art that the embodiments described herein can be combined with other embodiments.

In the description of embodiments of the present disclosure, the term "and/or" merely describes an association of associated objects, indicating that three relationships may exist, for example, A and/or B may indicate: A exists alone, both A and B exist, and B exists alone. In addition, the character "/" herein generally indicates that the preceding and following associated objects are in an "or" relationship.

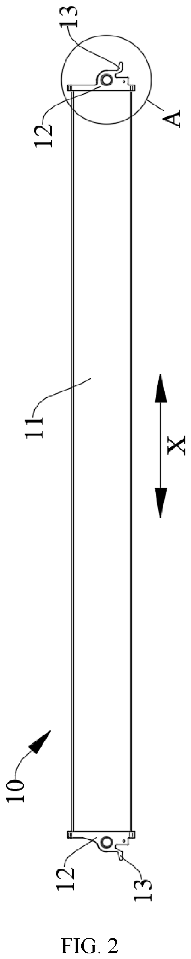

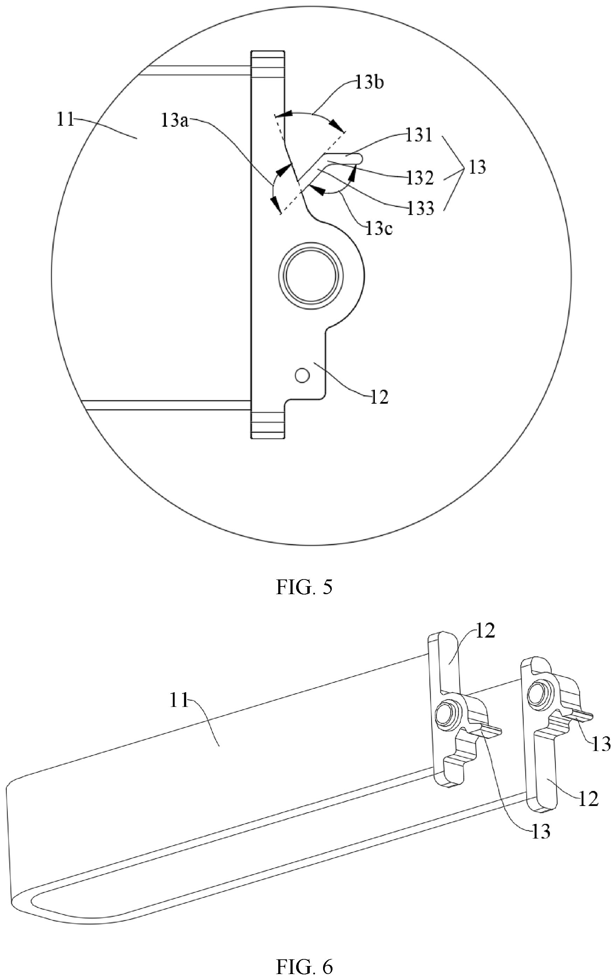

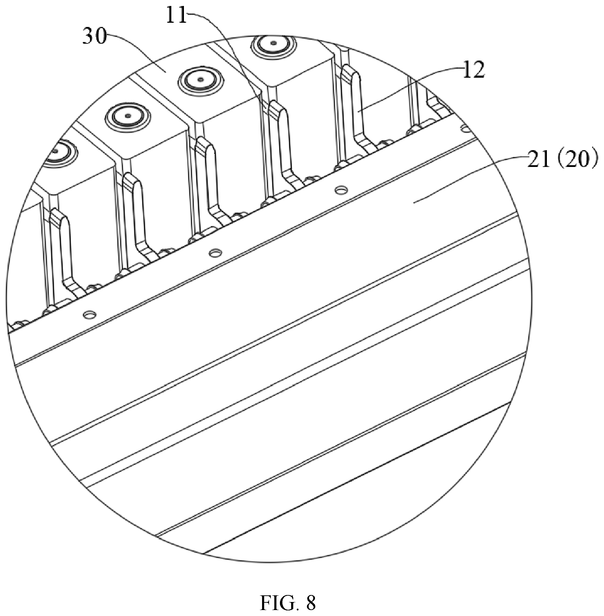

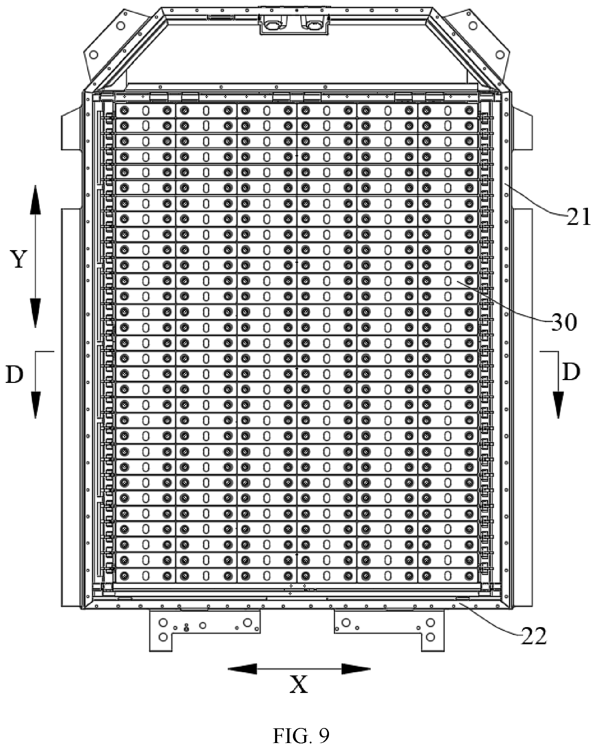

In the description of embodiments of the present disclosure, for convenience of explanation, as shown in FIG. 2, FIG. 6, FIG. 8, and FIG. 9, a direction of arrow X is a "first direction", "a length direction of a flow channel plate", and "a width direction of a box body"; as shown in FIG. 6 and FIG. 8, a direction of arrow Y is a "second direction" and "a length direction of a box body"; as shown in FIG. 6, a direction of arrow Z is a "vertical direction", a direction indicated by arrow Z along a vertical direction is referred to as "upper direction" and "top direction", and an opposite direction is referred to as "lower direction" and "bottom direction".

In the description of embodiments of the present disclosure, unless otherwise clearly specified and limited, technical terms such as "mounting", "connection", "join", and "fixation" should be understood in a broad sense, for example, it may be a fixed connection, a detachable connection, or integration; or a mechanical connection or an electrical connection; or direct connection or indirect connection through an intermediary; or internal communication of two elements or an interaction relationship between two elements. For those of ordinary skill in the art, the specific meanings of the above terms in the present disclosure can be understood according to specific situations.

In the description of embodiments of the present disclosure, unless otherwise clearly specified and limited, the technical term "contact" should be understood in a broad sense, which may be direct contact or contact through an intermediate medium; may be contact between two objects with basically no interaction force, or contact between two objects with interaction force.

A battery cell in the embodiments of the present disclosure include an electrode assembly and an electrolyte. The electrode assembly is formed by a positive electrode sheet, negative electrode sheet, and a separator. Operation of the battery cell mainly based on movement of metal ions between the positive electrode sheet and the negative electrode sheet. The positive electrode sheet includes a positive electrode current collector and a positive electrode active material layer. The positive electrode active material layer is applied to a surface of the positive electrode current collector. The current collector not coated with the positive electrode active material layer protrudes from the current collector coated with the positive electrode active material layer, and the current collector not coated with the positive electrode active material layer serves as a positive electrode tab after being stacked. A lithium-ion battery is used as an example. A material of the positive electrode current collector may be aluminum, and the positive electrode active material may be lithium cobalt oxide, lithium iron phosphate, ternary lithium, or lithium manganate. The negative electrode sheet includes a negative electrode current collector and a negative electrode active material layer. The negative electrode active material layer is applied to a surface of the negative electrode current collector. The current collector not coated with the negative electrode active material layer protrudes from the current collector coated with the negative electrode active material layer, and the current collector not coated with the negative electrode active material layer serves as a negative electrode tab after being stacked. A material of the negative electrode current collector may be copper, and the negative electrode active material may be carbon, silicon, or the like. A material of the separator may be PP (polypropylene, polypropylene), PE (polyethylene, polyethylene), or the like. In addition, the electrode assembly may be a wound structure or a stacked structure.

The battery cell may be a secondary battery, where the secondary battery refers to a battery cell that can be reused by activating an active material through charge after the battery cell is discharged.

The battery cell may be a lithium-ion battery, sodium-ion battery, sodium-lithium-ion battery, lithium metal battery, sodium metal battery, lithium-sulfur battery, magnesium-ion battery, nickel-metal hydride battery, nickel-cadmium battery, lead-acid battery, or the like. The embodiments of the present disclosure are not limited thereto.

The battery cell may be cylindrical battery cell, prismatic battery cell, pouch battery cell, or a battery cell of another shape. The prismatic battery cell includes a square battery cell, blade battery cell, and multi-prism battery, and the multi-prism battery cell is, for example, hexagonal prism battery. This is not particularly limited in the embodiments of the present disclosure.

The battery in the embodiments of the present disclosure refers to a single physical module that includes one or more battery cells to provide higher voltage and capacity.

An electric device in the embodiments of the present disclosure is powered by the above battery, and the electric device may be, but is not limited to, a mobile phone, tablet, notebook computer, electric toy, electric tool, electric bicycle, electric vehicle, ship, aerospace vehicle, and the like. The electric toys may include fixed or mobile electric toys, such as game console, electric vehicle toy, electric ship toy, and electric aircraft toy. The aerospace vehicle may include airplane, rocket, space shuttle and spaceship.

In the following embodiments, for convenience of description, the electric device in an embodiment of the present disclosure is a vehicle 1000 as an example for explanation. The following description is made with reference to the accompanying drawings.

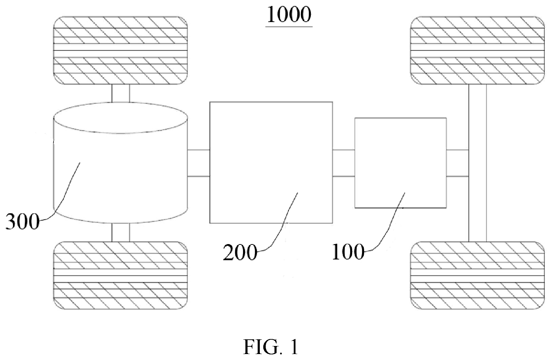

FIG. 1 is a structural schematic diagram of a vehicle 1000 according to an embodiment of the present disclosure. The vehicle 1000 may be a fuel vehicle, a gas vehicle, or a new energy vehicle, and the new energy vehicle may be a pure electric vehicle, a hybrid vehicle, a range-extended vehicle, or the like. As shown in FIG. 1, a battery 100 is provided inside the vehicle 1000, and battery 100 may be provided at a bottom, head, or tail of vehicle 1000. The battery 100 may be used for powering the vehicle 1000, for example, the battery 100 may serve as an operation power source for the vehicle 1000. The vehicle 1000 may further include a controller 200 and a motor 300. The controller 200 is configured to control the battery 100 to power the motor 300, for example, satisfying the operation power demands of starting, navigation, and driving of the vehicle 1000.

In some embodiments of the present disclosure, the battery 100 may not only serve as the operation power source for the vehicle 1000, but also as the driving power source for the vehicle 1000, completely or partially replacing fuel or natural gas to provide driving power for the vehicle 1000.

Below, the embodiments of the present disclosure are described in detail.

Currently, batteries are applied increasingly widely in daily life and various industries. Batteries are not only applied in energy storage power systems such as hydroelectric, thermal, wind, and solar power stations, but also widely applied in electric vehicles such as electric bicycle, electric motorcycle, and electric car, as well as in multiple fields such as aerospace. With the continuous expansion of battery application fields, the market demand is continuously increasing.

Multiple battery cells are provided in the battery, and the charge/discharge of the battery is achieved through electrochemical reactions inside the battery cell. To improve stability of the charge/discharge of the battery cell and the use safety of battery, a thermal management system, BMS (Battery Management System, Battery Management System) system, box body, reinforcing beam, and other auxiliary components are also provided in the battery.

It can be understood that, with a volume of the battery unchanged, a larger quantity of battery cells provided in the battery indicates a greater capacity of the battery. Therefore, volumes and masses of auxiliary components in the battery need to be optimized to accommodate as many battery cells as possible.

An accommodation space for accommodating the battery cell is provided in the box body. A reinforcing beam is located in the accommodation space, and two ends of the reinforcing beams along their extension direction are connected to inner walls on two opposite sides of the accommodation space, so as to improve the overall structural strength of the battery through the reinforcing beam, thereby reducing the risk of accidents such as fire or explosion caused by battery damage due to deformation in cases such as collisions, improving safety.

In addition, the thermal management system in the battery is provided with a thermal management assembly, and the thermal management assembly achieves heat energy exchange with the battery cell by conveying fluid, thereby achieving heat dissipation or heating of the battery cell. In this way, a temperature of the battery cell can be maintained within a suitable temperature range, reducing a probability of thermal runaway of the battery cell due to overcharge, overdischarge, needle penetration, drop, impact, and the like; further, this helps the battery cell to work normally in a low-temperature state.

In drop, collision, and the like of the battery, the inner wall of the accommodation space deforms under force, thereby generating an intrusion volume into the accommodation space, and colliding or squeezing with other components in the accommodation space. In this case, the thermal management assembly is prone to damage, thereby leading to the inability of the thermal management assembly to normally exchange heat with the battery cell. In this case, the battery cell is prone to runaway, posing risks of hazards such as combustion or explosion for the battery.

Therefore, to reduce the probability that the thermal management assembly fails in thermal management of the battery cell in a case that the thermal management assembly is squeezed by other components in the battery when the battery is impacted and deforms, an energy absorption member is provided on the thermal management assembly in the embodiments of the present disclosure. After the battery is impacted and deforms, the energy absorption member may preferentially contact and be squeezed by other components in the battery that deforms or shifts. Under the action of the squeezing force, the energy absorption member deforms. Through the deformation of the energy absorption member, part of the collision energy can be absorbed, thereby reducing the probability that other components in the battery that deforms or shifts contact other parts of the thermal management assembly. This helps maintain the operation of the thermal management function of the thermal management assembly when the battery is impacted.

Specifically, with reference to FIG. 2 to FIG. 6, an embodiment of the present disclosure provides a thermal management assembly 10. The thermal management assembly 10 is provided in the battery and configured for thermal management of a battery cell 30, such that a temperature of battery cell 30 is maintained within an appropriate temperature range, facilitating normal power supply of the battery as a power source for the electric device. The thermal management assembly 10 includes a flow channel plate 11, multiple current collectors 12, and energy absorption member 13.

Flow channel plate 11 is configured to convey fluid to exchange heat with the battery cell 30. That is, fluid flows in flow channel plate 11 to carry away the heat conducted from the battery cell 30 to the flow channel plate 11, or fluid conduct heat of the fluid to flow channel plate 11, and flow channel plate 11 then conducts the heat to the battery cell 30, thereby achieving heat exchange between the fluid and the battery cell 30. In this way, the temperature of the battery cell 30 may be maintained within an appropriate range.

A specific type of the fluid is not limited. For example, the fluid may be water, air, ethylene glycol, or the like.

A specific manner in which the flow channel plate 11 conveys fluid is not limited. For example, a through fluid channel is provided in the flow channel plate 11, and fluid flows in from one end of the fluid channel and out from another end, such that fluid can continuously flow in the flow channel plate 11 to continuously release or absorb heat.

It can be understood that one or multiple fluid channels may be provided in the flow channel plate 11. The fluid channel may extend straight or in a curve. An appropriate arrangement of a quantity and an extension manner of the fluid channels improve the heat exchange efficiency between the fluid and the battery cell 30.

A current collector 12 is configured to input fluid into the flow channel plate 11, or output fluid that has exchanged heat in the flow channel plate 11 to the current collector 12.

The current collector 12 is connected to the flow channel plate 11.

Among multiple current collectors 12, some are used to input fluid into the flow channel plate 11, and the other is used to receive fluid output from the flow channel plate 11.

Multiple current collectors 12 mean that a quantity of current collectors 12 is not less than two.

The energy absorption member 13 is provided on a side of at least one current collector 12 facing away from the flow channel plate 11. The energy absorption member 13 includes a force bearing portion 131 and a deformation portion 132. The force bearing portion 131 is located at an end of the deformation portion 132 away from current collector 12. A rigidity of the deformation portion 132 is less than a rigidity of force bearing portion 131.

A rigidity refers to a value of an external force causing deformation of an object. The rigidity is related to object material properties, geometric shape, boundary support conditions, and a form of external force application.

Among all current collectors 12, only some of the current collectors 12 may be provided with the energy absorption member 13, or all current collectors 12 may be provided with the energy absorption member 13.

The energy absorption member 13 is located on a side of the current collector 12 facing away from the flow channel plate 11. In other words, the energy absorption member 13 protrudes from an outer contour surface of the current collector 12, such that the energy absorption member 13 may be more likely to contact the deforming component in the battery than the current collector 12.

It can be understood that the energy absorption member 13 is impacted before the current collector 12 from a side of the current collector 12 facing away from the flow channel plate 11 toward a direction of the flow channel plate 11.

Further, the force bearing portion 131 is located at an end of the deformation portion 132 away from the current collector 12, such that the force bearing portion is more likely to contact the component that deforms in the battery than the deformation portion 132.

Since the rigidity of the deformation portion 132 is less than the rigidity of the force bearing portion 131, in the case that the force bearing portion 131 contacts the component that deforms in the battery and receives a force, the deformation portion 132 can deform before the force bearing portion, and then the deformation portion 132 may move as the deformation portion 132 deforms. In this way, through the deformation of the deformation portion 132 and the movement of force bearing portion 131, the energy absorption member 13 may absorb the energy of the force received by the force bearing portion 131 during the deformation of the energy absorption member 13.

In the thermal management assembly 10 in the embodiments of the present disclosure, the energy absorption member 13 is provided on the current collector 12. In this case, during collision between the thermal management assembly 10 and another component from the side of the current collector 12 facing away from the flow channel plate 11, since the energy absorption member 13 is more likely to contact the collision object, the energy absorption member 13 can first absorb the collision energy through its own deformation, thereby effectively reducing the collision energy transmitted to the current collector 12 and the flow channel plate 11, reducing the probability that the thermal management function of the thermal management assembly 10 fails due to damage to the flow channel plate 11, the current collector 12, and their connection position during the collision, and thereby indirectly reducing the probability of thermal runaway of the battery cell 30, helping improve the safety of the battery.

It can be understood that one or multiple energy absorption members 13 may be provided on one current collector 12.

In some embodiments, an elastic modulus of a material of the energy absorption member 13 is lower than an elastic modulus of the material of the current collector 12, such that in the case that the energy absorption member 13 is impacted and the energy absorption member 13 squeezes the current collector 12, the energy absorption member 13 can further deform to absorb collision energy, and reduce the probability that squeezing of the energy absorption member 13 on the current collector 12 causes damage to the current collector 12.

A specific implementation for achieving a lower rigidity of the deformation portion 132 than the rigidity of the force bearing portion 131 is not limited.

For example, the deformation portion 132 and the force bearing portion 131 are made of a same material, and in cross-sections of the energy absorption member 13 perpendicular to its own extension direction, a cross-section with the smallest area is located in the deformation portion 132. This simplifies the manufacturing process of the deformation portion 132 and the force bearing portion 131.

For another example, the deformation portion 132 and the force bearing portion 131 have the same cross-section area at each position perpendicular to the extension direction of the energy absorption member 13; the deformation portion 132 and the force bearing portion 131 are made of different materials; and the elastic modulus of the material of the force bearing portion 131 is greater than the elastic modulus of the material of the deformation portion 132.

In some embodiments, the energy absorption member 13 and the current collector 12 are integrated. In other words, the energy absorption member 13 and the current collector 12 are processed and manufactured simultaneously.

This helps simplify the processing and manufacturing process of the thermal management assembly 10, reduce assembly steps, and lower production costs. Further, this helps reduce the probability that after an impact, fracture between the energy absorption member 13 and the current collector 12 leads to a decline in the energy absorption effect of the energy-absorbing member 13 for impact energy.

In other embodiments, the energy absorption member 13 and the current collector 12 are detachably connected. This facilitates removal of the deformed energy absorption member 13 after an impact, facilitating recycling of intact parts in the thermal management assembly 10.

It can be understood that, depending on factors such as arrangement of the battery, an arrangement position of the thermal management assembly 10 in the battery, shapes and distances of other components in the battery, and the like, the current collector 12 has different probabilities of being impacted in various directions, and the force bearing portion 131 is oriented toward a direction where the current collector 12 is more likely to be impacted in probability.

It can be understood that the arrangement of the force bearing portion 131 facilitates the collision of the force bearing portion 131 before the current collector 12.

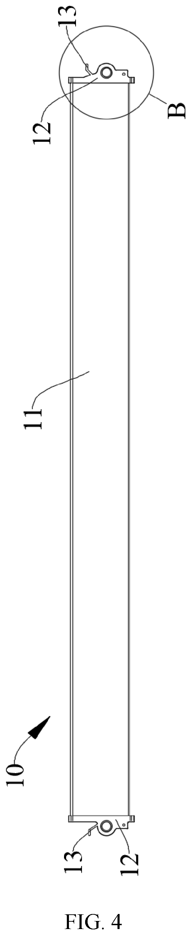

In some embodiments, with reference to FIG. 2 and FIG. 4, the current collector 12 is located at an end of the flow channel plate 11 along a length direction of the flow channel plate 11, and a dimension of the current collector 12 along the length direction of the flow channel plate 11 is less than a dimension of the current collector plate perpendicular to the length direction of the flow channel plate 11. That is, a probability that the current collector 12 is impacted along the length direction of the flow channel plate 11 is greater than a probability of being impacted in another direction.

The length direction of the flow channel plate 11 refers to a direction in which the flow channel plate 11 has the largest dimension among the three-dimensional dimensions.

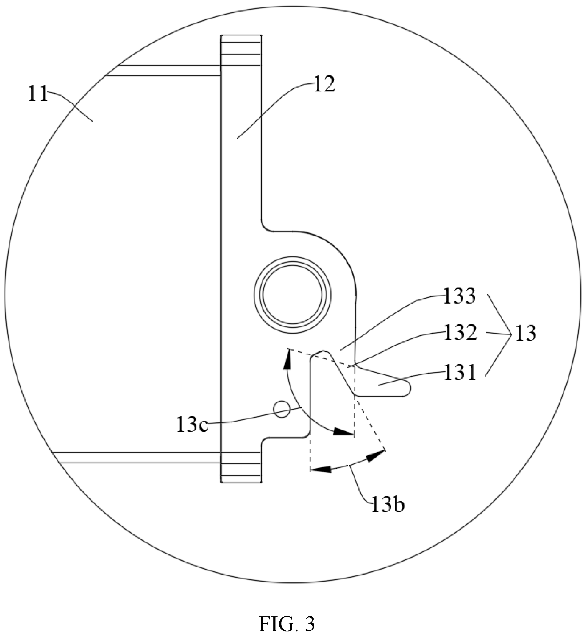

In some embodiments, with reference to FIG. 2 and FIG. 3, an end of the force bearing portion 131 away from the current collector 12 protrudes beyond an end of the current collector 12 away from the flow channel plate 11 along a direction away from the flow channel plate 11.

That is, an end of the force bearing portion 131 away from the flow channel plate 11 along the length direction of flow channel plate 11 forms an end of the thermal management assembly 10 along the length direction of the flow channel plate 11.

In this way, in the case that an impact direction is along the length direction of the flow channel plate 11, the force bearing portion 131 is more likely to be impacted before the current collector 12, and then the energy absorption member 13 deforms, thereby better reducing the collision energy transmitted to the current collector 12 and the flow channel plate 11, and providing protection for the current collector 12 and the flow channel plate 11.

It can be understood that after the force bearing portion 131 is impacted, it is necessary to reduce a probability that the force bearing portion 131 directly inserts into the deformation portion 132, and the guide force bearing portion 131 to deflect relative to the deformation portion 132.

In some embodiments, with reference to FIG. 3 and FIG. 5, an end of the force bearing portion 131 away from the deformation portion 132 is arc-shaped.

It can be understood that the end of the force bearing portion 131 away from the current collector 12 is more likely to be impacted first.

In this way, in the case that the force bearing portion 131 is impacted, the probability of stress concentration at the end of the force bearing portion 131 is reduced, reducing the probability that the force bearing portion 131 is damaged due to stress concentration, leading to movement inability and thus inability to deform the deformation portion 132 to absorb more collision energy; further, the arc shape leads to a component force of the impact force, thereby guiding the force bearing portion 131 to deflect relative to the deformation portion 132 in a preset direction, such that the energy absorption member 13 better absorbs the collision energy.

It can be understood that a larger deflection angle of the force bearing portion 131 relative to the deformation portion 132 means more work required to push the force bearing portion 131 to deflect, more consumed impact energy, and less impact energy transmitted to the current collector.

In some embodiments, with reference to FIG. 2 to FIG. 5, the energy absorption member 13 includes a connection portion 133, where the connection portion 133 is located at an end of the deformation portion 132 close to the current collector 12 and connected to the current collector 12, and a rigidity of the deformation portion 132 is less than a rigidity of the connection portion 133.

That is, along a direction away from the current collector 12, the energy absorption member 13 sequentially includes the connection portion 133, the deformation portion 132, and the force bearing portion 131.

In this way, providing the connection portion 133 helps increase a contact area between the energy absorption member 13 and the current collector 12, reducing the probability that a pressure of the force received by the current collector 12 is excessively high and thus causes damage in an impact; in addition, since the connection portion 133 is provided, the force bearing portion 131 is farther from the current collector 12, and then the force bearing portion 131 can deflect relative to the deformation portion 132 in a larger range, thereby absorbing more impact energy, further reducing the impact energy transmitted to the current collector 12.

It can be understood that the rigidity of the connection portion 133 may be the same as or different from the rigidity of the force bearing portion 131.

In some embodiments, with reference to FIG. 3 and FIG. 5, an extension direction of the connection portion 133 intersects an extension direction of the force bearing portion 131.

That is, the extension direction of the connection portion 133 and the extension direction of the force bearing portion 131 are not on the same straight line, thereby weakening the support provided by the connection portion 133 to the force bearing portion 131.

In this way, in the case that the force bearing portion 131 is impacted, deflection of the force bearing portion 131 relative to the connection portion 133 is facilitated, and the force bearing portion 131 does not translate directly toward the connection portion 133, facilitating bending and deformation of the energy absorption member 13, further facilitating absorption of more impact energy.

The relative relationship between the extension direction of the connection portion 133 and the current collector is not limited.

In some embodiments, the connection portion 133 extends in a direction away from the flow channel plate 11. This allows the force bearing portion 131 to be as far as possible from the current collector 12, thereby facilitating collision of the force bearing portion 131 before the current collector 12; and this allows the force bearing portion 131 to deflect in a larger angle range, thereby absorbing more collision energy.

For example, with reference to FIG. 3 and FIG. 5, the extension direction of the connection portion 133 is inclined relative to the length direction of the flow channel plate 11, such that a first included angle 13a is formed between one side of the connection portion 133 and the current collector 12, and a second included angle 13b is formed between another side and the current collector 12, the first included angle 13a is greater than the second included angle 13b, and the force bearing portion 131 is located on a side of the connection portion 133 close to the first included angle 13a.

Since the force bearing portion 131 is closer to the first included angle 13a, in the case that the force bearing portion 131 is impacted, the force bearing portion 131 deflects toward the side where first included angle 13a is located. In this way, setting the first included angle 13a to be greater than the second included angle 13b enables the force bearing portion 131 to deflect in a larger angle, thereby allowing absorption of more collision energy through the deflection of the force bearing portion 131.

Depending on the specific shape of the current collector 12 and the specific shape of the connection portion 133, the specific value of the first included angle 13a is not limited.

For example, the first included angle 13a is not less than 90°, such that the force bearing portion 131 can deflect in a larger angle, thereby allowing the deflection of force bearing portion 131 to absorb more collision energy.

The specific value of first included angle 13a is not limited, for example, 90°, 120°, 135°, 150°, 180°, or the like.

Refer to FIG. 3. The first included angle 13a is 180°.

Depending on the specific shape of the current collector 12 and the specific shape of the connection portion 133, the specific value of the second included angle 13b is not limited.

For example, the second included angle 13b is not less than 30°, to improve a structural rigidity of the connection position between the connection portion 133 and the current collector 12, reducing the probability that deformation at the connection position between the connection portion 133 and the current collector 12 leads to squeezing and damage of the current collector 12 after the energy absorption member 13 is impacted.

The specific value of the second included angle 13b is not limited, for example, 30°, 35°, 40°, 45°, or the like.

In some embodiments, with reference to FIG. 3, an area of the cross-section of the connection portion 133 at an end close to the deformation portion 132 along the extension direction of the connection portion 133 is less than an area of the cross-section at an end close to the current collector 12. This facilitates deformation of the deformation portion 132 and reduces a pressure caused by the force transmitted to the current collector 12.

The cross-section of the connection portion 133 refers to the cross-section of the connection portion 133 perpendicular to the extension direction of the connection portion 133.

In other embodiments, with reference to FIG. 5, areas of cross-sections of the connection portion 133, the deformation portion 132, and the force bearing portion 131 along their respective extension directions are the same, reducing the manufacturing difficulty of the three portions during the manufacturing process of the energy absorption member 13.

In some embodiments, with reference to FIG. 3, a side surface of an end of the force bearing portion 131 close to the deformation portion 132 facing the second included angle 13b, a side surface of the deformation portion 132 facing the second included angle 13b, and a side surface of the connection portion 133 facing the second included angle 13b are in the same plane.

In this way, in the case that the force bearing portion 131 is impacted, tendency of the force bearing portion 131 to deform and deflect toward a side of the second included angle 13b is suppressed, while the force bearing portion 131 is more likely to deform and deflect toward a side of the first included angle 13a, thereby guiding a deflection direction of the force bearing portion 131.

In some embodiments, with reference to FIG. 3 and FIG. 5, a third included angle 13c formed between the force bearing portion 131 and the connection portion 133 is an obtuse angle.

This allows the force bearing portion 131 to have a larger range for deflection and deformation, thereby absorbing more collision energy.

The method for determining the specific values of the first included angle 13a, the second included angle 13b, and the third included angle 13c is not limited. For example, in a process of measuring the first included angle 13a, in an environment at room temperature of 25°C, a measurement surface of a base ruler of a protractor is aligned with a side surface of the connection portion 133, and a measurement surface of a straight edge of the protractor is aligned with a side surface of the current collector 12. A specific value of the first included angle 13a is read from the protractor.

It can be understood that, in the case that the force bearing portion 131 deflects to a limit position under the action of the collision force, the force bearing portion 131 abuts against the connection portion 133, or the force bearing portion 131 abuts against the current collector 12.

The specific arrangement of the flow channel plate 11 and the current collector 12 is not limited.

In some embodiments, with reference to FIG. 2 and FIG. 4, the flow channel plate 11 extends straight, at least one current collector 12 is provided at each of two ends of the flow channel plate 11 along a length direction of the flow channel plate 11, and at least one of at least two current collectors 12 corresponding to the flow channel plate 11 is provided with an energy absorption member 13. That is, at least two current collectors 12 and at least one energy absorption member 13 are provided on the flow channel plate 11.

The length direction of the flow channel plate 11 is the extension direction of the flow channel plate 11.

In this way, in the case that the thermal management assembly 10 is impacted in two directions of an extension direction of the flow channel plate 11, at least part of the impact can be absorbed through the energy absorption member 13, thereby protecting the current collector 12 and the energy absorption member 13.

In other embodiments, with reference to FIG. 6, the flow channel plate 11 extends in a curve, at least one current collector 12 is provided at each of two ends of the flow channel plate 11 along the extension direction of the flow channel plate 11, and at least one of at least two current collectors 12 corresponding to the flow channel plate 11 is provided with the energy absorption member 13.

In this way, the extension direction of the flow channel plate 11 better adapts to the arrangement of other components in the battery.

In some embodiments, the flow channel plate 11 extends in multiple reciprocating bends. In other embodiments, with reference to FIG. 6, the flow channel plate 11 bends once to form a U-shape, such that the current collector 12 and the energy absorption member 13 are both located on the same side of the flow channel plate 11, facilitating mounting of the thermal management assembly 10 into the battery, with energy absorption members 13 oriented toward directions where the thermal management assembly 10 is more likely to be impacted.

The thermal management assembly 10 in an embodiment of the present disclosure is specifically described below.

The flow channel plate 11 extends straight. One current collector 12 is provided at each of two ends of the flow channel plate 11 along the length direction of the flow channel plate 11, and an energy absorption member 13 is provided on the current collector 12 at each end. The energy absorption member 13 includes a force bearing portion 131, a deformation portion 132, and a connection portion 133. The force bearing portion 131 is located at an end of the deformation portion 132 away from the current collector 12. The energy absorption member 13 and the current collector 12 are integrated. The deformation portion 132 and the force bearing portion 131 are made of a same material, and in cross-sections of the energy absorption member 13 perpendicular to its own extension direction, the cross-section with the smallest area is located in the deformation portion 132. An end of the force bearing portion 131 away from the deformation portion 132 is arc-shaped. The connection portion 133 is located at an end of the deformation portion 132 close to the current collector 12 and connected to the current collector 12, and a rigidity of the deformation portion 132 is less than a rigidity of the connection portion 133. The connection portion 133 extends in a direction away from the flow channel plate 11, and the extension direction is inclined relative to the length direction of the flow channel plate 11, such that a first included angle 13a is formed between one side of the connection portion 133 and the current collector 12, and a second included angle 13b is formed between another side and the current collector 12, the first included angle 13a is greater than the second included angle 13b, and the force bearing portion 131 is located on a side of the connection portion 133 close to the first included angle 13a. The first included angle 13a is not less than 90°. The second included angle 13b is not less than 30°. A side surface of an end of the force bearing portion 131 close to the deformation portion 132 facing the second included angle 13b, a side surface of the deformation portion 132 facing the second included angle 13b, and a side surface of the connection portion 133 facing the second included angle 13b are in the same plane. The third included angle 13c formed between the force bearing portion 131 and the connection portion 133 is an obtuse angle.

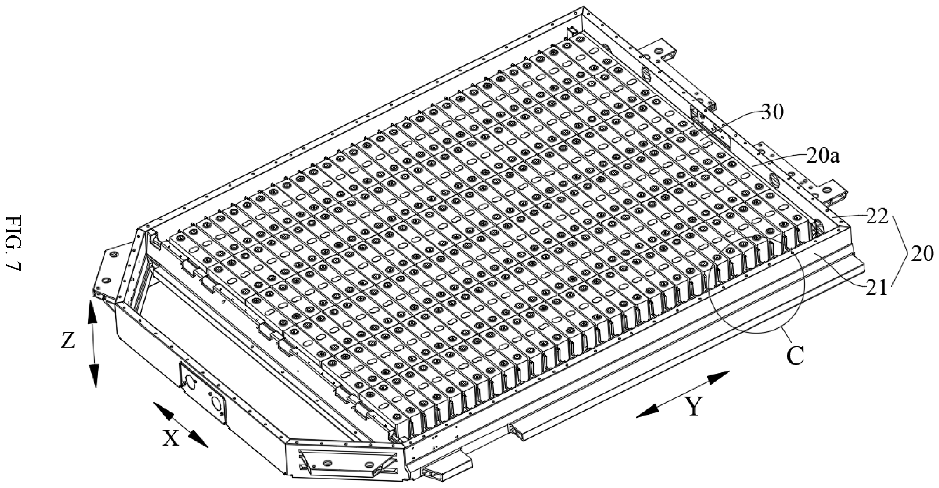

An embodiment of the present disclosure further provides a battery box configured to accommodate a battery cell 30. Refer to FIG. 7 to FIG. 10. The battery box includes a box body 20 and the thermal management assembly 10 in any of the foregoing embodiments. An accommodation space 20a is provided in the box body 20. The accommodation space 20a is configured to accommodate the battery cell 30 and the thermal management assembly 10. The current collector 12 is located at two ends of the flow channel plate 11 along a first direction. An inner wall of the accommodation space 20a along a first direction is spaced apart from the force bearing portion 131.

The box body 20 provides mounting positions for other components in the battery, and performs protection and sealing functions, prolonging the service life of the battery and improving the use safety of the battery.

The current collector 12 is located at two ends of the flow channel plate 11 along the first direction, that is, the energy absorption member 13 is located at two ends of the thermal management assembly 10 along the first direction.

There is a spacing between the inner wall of the accommodation space 20a along the first direction and the force bearing portion 131, in other words, the two do not contact. In this way, a buffer space is formed between the inner wall of the accommodation space 20a along the first direction and the energy absorption member 13. In this way, in an impact, the box body 20 needs to deform to a certain degree before colliding with the energy absorption member 13, and the deformation of the box body 20 absorbs collision energy, thereby reducing the collision energy transmitted to the energy absorption member 13, further reducing the collision energy transmitted to the current collector 12, reducing the probability that the current collector 12 is damaged due to collision. Further, direct transmission of vibrations under normal operation of the box body 20 to the energy absorption member 13 through contact is avoided, reducing the probability of noise caused by vibration collision between the two, avoiding a situation where energy from vibration is transmitted to the deformation portion 132 and leads to deformation of the energy absorption member 13, which reduces the collision energy absorbed by the energy absorption member 13.

A specific arrangement of the thermal management assembly 10 in accommodation space 20a is not limited.

In some embodiments, with reference to FIG. 7 to FIG. 9, the battery box includes multiple thermal management assemblies 10, where the multiple thermal management assemblies 10 are spaced apart along a second direction, a gap for placing a battery cell 30 is formed between two adjacent thermal management assemblies 10, current collectors 12 at same end of the thermal management assembly 10 along a first direction are interconnected, and the first direction is orthogonal to the second direction.

This improves the thermal management efficiency of the battery box for multiple battery cells 30, and fluid can be simultaneously introduced into the current collectors 12 at the same end of the thermal management assemblies 10 along the first direction, and the fluid is collected through the current collectors 12 at the other end after heat exchange.

In some embodiments, the first direction is the same as a length direction of a flow channel plate 11.

In some embodiments where multiple thermal management assemblies 10 are provided, all flow channel plates 11 of the thermal management assemblies 10 are arranged side by side, and the flow channel plate 11 has a first end; the first end is located at the same end of all flow channel plates 11; a first end of each flow channel plate 11 is provided with at least one current collector 12; and at least one of at least one current collector 12 corresponding to the first end of the flow channel plate 11 is provided with an energy absorption member 13.

That is, current collectors 12 are provided on the same side of all flow channel plates 11 along a certain direction, and energy absorption members 13 are provided on at least some of the current collectors 12 located on that side.

In this way, based on the arrangement of other components in the battery box, the energy absorption members 13 in the thermal management assemblies 10 are oriented toward directions where they are more likely to be impacted or directions where the box body 20 have relatively weak structures.

For example, if an electrical box is provided at an end of the box body 20 along a length direction of the box body 20, the first ends of the flow channel plates 11 are located on a side away from the electrical box along the length direction of box body 20. In this way, the structure of the electrical box provides a buffer space, and impacts from this side are less likely to damage thermal management assemblies 10 than another side. Therefore, the current collectors 12 at the end of the flow channel plates 11 close to the electrical box may not be provided with the energy absorption members 13 to simplify the structure. Further, since the first end is closer to an edge of the box body 20 than another end of the flow channel plate 11, providing the energy absorption member 13 at the first end can further reduce the probability of damage to the thermal management assemblies 10 in an impact.

It can be understood that, in an embodiment where the flow channel plate 11 is U-shaped, both ends of the flow channel plate 11 along an extension direction of the flow channel plate 11 are first ends.

In some embodiments where multiple thermal management assemblies 10 are provided, with reference to FIG. 7 and FIG. 8, the flow channel plate 11 has a second end, the second end is located at another end of each of the flow channel plates 11 of each thermal management assembly 10, the second end of each flow channel plate 11 is provided with at least one current collector 12, and at least one of at least one current collector 12 corresponding to the second end of flow channel plate 11 is provided with an energy absorption member 13.

That is, current collectors 12 are provided on both sides of all flow channel plates 11 along a certain direction, and energy absorption members 13 are provided on at least some of the current collectors 12 located on each side.

In this way, the energy absorption members 13 in the thermal management assemblies 10 are oriented toward multiple directions where they are more likely to be impacted or multiple directions where box body 20 has relatively weak structures.

For example, the flow channel plate 11 extends linearly along a width direction of the box body 20, and then the first end is one end of the flow channel plate 11 along the width direction of box body 20, and the second end is another end, such that in the case where the box body 20 is impacted along its width direction, the probability of damage to the thermal management assemblies 10 after being impacted is reduced.

The first end may be one end of the flow channel plate 11 along the first direction, and the second end may be another end of the flow channel plate 11 along the first direction.

A specific structure of box body 20 is not limited.

In some embodiments, with reference to FIG. 7 to FIG. 9, the box body 20 includes two side beams 21 and two end beams 22. The two side beams 21 are spaced apart along the first direction, the side beams 21 extend along the second direction, the end beams 22 are connected between the two side beams 21 along the second direction, the two end beams 22 are spaced apart along the second direction, and the side beams 21 and the end beams 22 jointly enclose an accommodation space 20a.

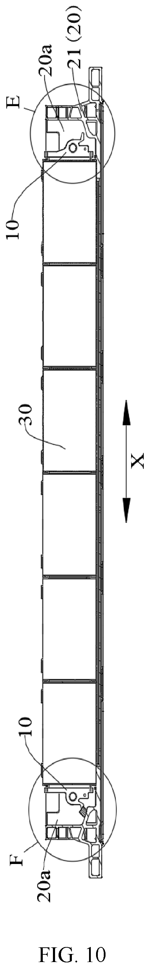

That is, with reference to FIG. 10, the force bearing portion 131 is spaced apart from the side beam 21.

In some embodiments, the battery box further includes a reinforcing beam, and the reinforcing beam is provided in the accommodation space 20a and connected between the two side beams 21 along the first direction. In other embodiments, the battery box does not include the reinforcing beam, to be specific, after the side beam 21 deforms upon collision and contacts the energy absorption member 13, only the deformation of the energy absorption member 13 absorbs the collision energy transmitted from side beam 21 to the thermal management assembly 10. In this way, more battery cells 30 can be arranged in the accommodation space 20a, thereby increasing a capacity of the battery.

In some embodiments, a top side of the battery box along a vertical direction is open, to allow placement of the battery cell 30 into the battery box.

The vertical direction is an extension direction of the line of gravity.

The first direction, the second direction, and the vertical direction are orthogonal to each other.

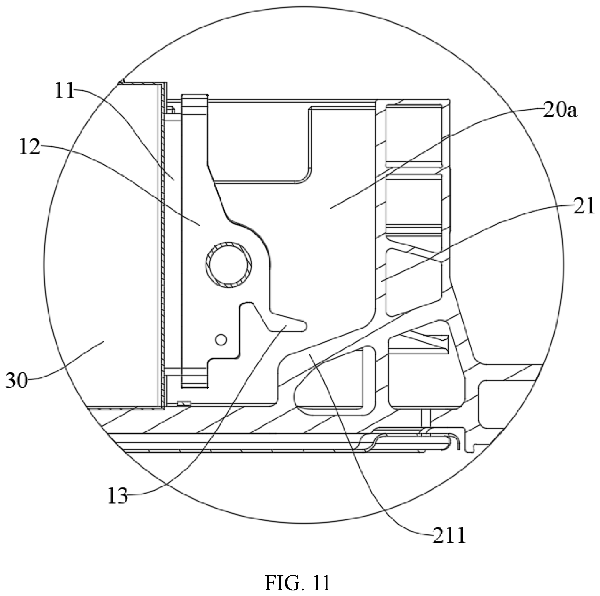

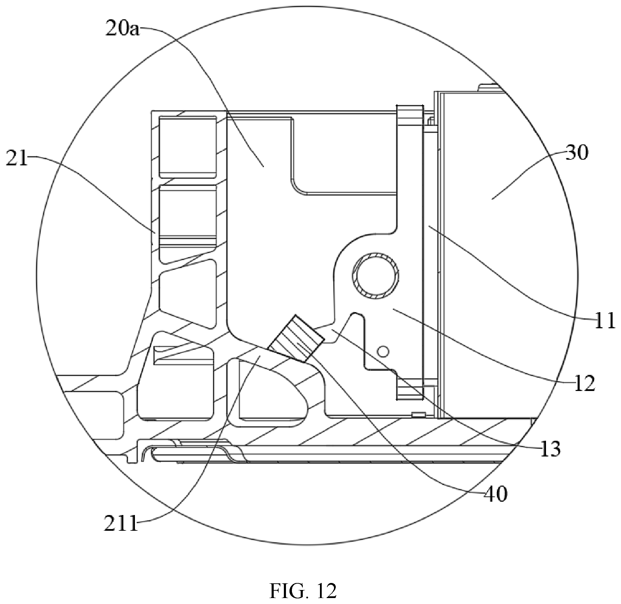

In some embodiments, with reference to FIG. 11 and FIG. 12, a part of the inner wall of the accommodation space 20a along the first direction protrudes to form a reinforcing protrusion 211, and the reinforcing protrusion 211 extends along the second direction. Providing the reinforcing protrusion 211 can further improve a structural rigidity of the box body 20, helping reduce a deformation amount of the box body 20 in a collision.

It can be understood that, in the case where the box body 20 is collided along the first direction and deforms, the reinforcing protrusion 211 is more likely to contact the thermal management assembly 10 along the first direction than other parts of the inner wall of the accommodation space 20a along the first direction.

In some embodiments, with reference to FIG. 11, the energy absorption member 13 is located on a side of the current collector 12 close to the reinforcing protrusion 211, and the force bearing portion 131 is located at an end of the deformation portion 132 close to the reinforcing protrusion 211. In this way, in a collision, the energy absorption member 13 contacts the reinforcing protrusion 211 before the current collector 12 and absorbs collision energy, thereby reducing the probability that contact between the reinforcing protrusion 211 and the current collector 12 causes damage to the current collector 12.

In the embodiment where the side beam 21 is provided, with reference to FIG. 11 and FIG. 12, the reinforcing protrusion 211 is located on the side beam 21.

It can be understood that the specific extension direction of the energy absorption member 13 adapts to the position of the reinforcing protrusion 211.

In some embodiments, with reference to FIG. 2, FIG. 3, FIG. 10, and FIG. 11, the reinforcing protrusion 211 is located at a bottom of the inner wall of the accommodation space 20a along the first direction, and the energy absorption member 13 extends obliquely downward, to improve the probability of contact between the reinforcing protrusion 211 and the energy absorption member 13 in a collision.

In other embodiments, with reference to FIG. 4 and FIG. 5, the reinforcing protrusion 211 is located at a top of the inner wall of the accommodation space 20a along the first direction, and the energy absorption member 13 extends obliquely upward, to improve the probability of contact between the reinforcing protrusion 211 and the energy absorption member 13 in a collision.

In some embodiments, in a projection plane perpendicular to the first direction, at least part of a projection of the force bearing portion 131 is located within a projection range of the reinforcing protrusion 211.

In this way, in a process where the box body 20 is impacted and the reinforcing protrusion 211 intrudes into the accommodation space 20a along the first direction, the force bearing portion 131 may contact the reinforcing protrusion 211, thereby absorbing collision energy through deformation of the deformation portion 132.

In some embodiments, with reference to FIG. 12, the battery box further includes an elastic conductive member 40, the elastic conductive member 40 is sandwiched between the inner wall of the accommodation space 20a and the energy absorption member 13, and the elastic conductive member 40 is elastically deformable along the first direction.

The elastic conductive member 40 is elastic and conductive. Due to the conductivity, the thermal management assembly 10 and the box body 20 are maintained at the same potential, facilitating insulation tests on the battery. Due to the elasticity, contact between the box body 20, the elastic conductive member 40, and the thermal management assembly 10 is maintained, such that in environments such as vibration, the thermal management assembly 10 and the box body 20 can maintain the same potential.

A specific type of the elastic conductive member 40 is not limited, for example, may be conductive foam or the like.

An embodiment of the present disclosure further provides a battery 100. Refer to FIG. 7 to FIG. 10. The battery 100 includes a battery cell 30 and the battery box in any of the foregoing embodiments. The battery cell 30 is disposed in the accommodation space 20a and attached to the flow channel plate 11, such that fluid flowing in the flow channel plate 11 can exchange heat with the battery cell 30, thereby maintaining a temperature of the battery cell 30 within an appropriate temperature range.

In an embodiment where the battery cell 30 is a square battery cell, among six surfaces of the battery cell 30, the surface with the largest area is attached to the flow channel plate 11, thereby improving the heat exchange efficiency between battery cell 30 and the fluid.

An embodiment of the present disclosure further provides an electric device including the battery 100 in the foregoing embodiments, and the battery 100 is configured as a power source for the electric device.

In this way, provision of the energy absorption member 13 can reduce the probability of damage to the current collector 12 and the flow channel plate 11 in a collision of the electric device.

In some embodiments where the electric device is the vehicle 1000, the first direction is a width direction of the vehicle 1000, the second direction is a length direction of the vehicle 1000, and the vertical direction is a height direction of the vehicle 1000.

In this way, the energy absorption member 13 can effectively absorb collision energy in a side collision of the vehicle 1000, reducing the probability of damage to the current collector 12 in this case.

A side collision of the vehicle 1000 refers to an impact on the vehicle 1000 from the width direction of vehicle 1000.

The various embodiments/implementations provided in the present disclosure can be combined with each other where no conflict arises.

The above embodiments are merely preferred embodiments of the present disclosure and are not used to limit the embodiments of the present disclosure. For those skilled in the art, the embodiments of the present disclosure can have various changes and modifications. Any modifications, equivalent substitutions, improvements, and the like made within the spirit and principles of the embodiments of the present disclosure should be included within the protection scope of the embodiments of the present disclosure.

## Claims

1. A thermal management assembly, configured for thermal management of a battery cell, wherein the thermal management assembly comprises:
a flow channel plate, configured to convey fluid to exchange heat with the battery cell;
multiple current collectors, wherein the current collectors are connected to the flow channel plate; and
an energy absorption member, wherein the energy absorption member is provided on a side of at least one current collector facing away from the flow channel plate, the energy absorption member comprises a force bearing portion and a deformation portion, the force bearing portion is located at an end of the deformation portion away from the current collector, and a rigidity of the deformation portion is less than a rigidity of the force bearing portion.

2. The thermal management assembly according to claim 1, wherein the deformation portion and the force bearing portion are made of a same material, and in cross-sections of the energy absorption member perpendicular to an extension direction of the energy absorption member, a cross-section with a smallest area is located in the deformation portion.

3. The thermal management assembly according to claim 1 or 2, wherein the energy absorption member and the current collector are integrated.

4. The thermal management assembly according to any of claims 1 to 3, wherein the current collector is located at an end of the flow channel plate along a length direction of the flow channel plate, and an end of the force bearing portion away from the current collector protrudes beyond an end of the current collector away from the flow channel plate along a direction away from the flow channel plate.

5. The thermal management assembly according to any of claims 1 to 4, wherein an end of the force bearing portion away from the deformation portion is arc-shaped.

6. The thermal management assembly according to any of claims 1 to 5, wherein the energy absorption member comprises a connection portion, the connection portion is located at an end of the deformation portion close to the current collector and connected to the current collector, the rigidity of the deformation portion is less than a rigidity of the connection portion, and an extension direction of the connection portion intersects an extension direction of the force bearing portion.

7. The thermal management assembly according to claim 6, wherein the connection portion extends in a direction away from the flow channel plate; an extension direction of the connection portion is inclined relative to the length direction of the flow channel plate, such that a first included angle is formed between a side of the connection portion and the current collector, and a second included angle is formed between another side and the current collector; the first included angle is greater than the second included angle; and the force bearing portion is located on a side of the connection portion close to the first included angle.

8. The thermal management assembly according to claim 7, wherein the first included angle is not less than 90°;
and/or the second included angle is not less than 30°.

9. The thermal management assembly according to claim 7 or 8, wherein a side surface of an end of the force bearing portion close to the deformation portion facing the second included angle, a side surface of the deformation portion facing the second included angle, and a side surface of the connection portion facing the second included angle are in a same plane.

10. The thermal management assembly according to any of claims 6 to 9, wherein a third included angle formed between the force bearing portion and the connection portion is an obtuse angle.

11. The thermal management assembly according to any of claims 6 to 10, wherein the flow channel plate extends straight, at least one of the current collectors is provided at each of two ends of the flow channel plate along the length direction of the flow channel plate, and at least one of at least two current collectors corresponding to the flow channel plate is provided with the energy absorption member;
or the flow channel plate extends in a curve, at least one of the current collectors is provided at each of two ends of the flow channel plate along the extension direction of the flow channel plate, and at least one of at least two current collectors corresponding to the flow channel plate is provided with the energy absorption member.

12. A battery box, configured to accommodate a battery cell, wherein the battery box comprises a box body and the thermal management assembly according to any of claims 1 to 11, an accommodation space is provided in the box body, the accommodation space is configured to accommodate the battery cell and the thermal management assembly, the current collectors are located at two ends of the flow channel plate along a first direction, and an inner wall of the accommodation space along the first direction is spaced apart from the force bearing portion.

13. The battery box according to claim 12, wherein a part of the inner wall of the accommodation space along the first direction protrudes to form a reinforcing protrusion, the energy absorption member is located on a side of the current collector close to the reinforcing protrusion, and the force bearing portion is located at an end of the deformation portion close to the reinforcing protrusion.

14. The battery box according to claim 13, wherein in a projection plane perpendicular to the first direction, at least part of a projection of the force bearing portion is within a projection range of the reinforcing protrusion.

15. The battery box according to any of claims 12 to 14, wherein the battery box further comprises an elastic conductive member, the elastic conductive member is sandwiched between the inner wall of the accommodation space and the energy absorption member, and the elastic conductive member is elastically deformable along the first direction.

16. The battery box according to any of claims 12 to 15, wherein multiple thermal management assemblies are provided, all flow channel plates of the thermal management assemblies are arranged side by side, the flow channel plate has a first end, first ends are located at a same end of all the flow channel plates, the first end of each flow channel plate is provided with at least one current collector, and at least one of at least one current collector corresponding to the first end of the flow channel plate is provided with an energy absorption member.

17. The battery box according to claim 16, wherein the flow channel plate has a second end, the second end is located at another end of each of the flow channel plates of the thermal management assemblies, the second end of each flow channel plate is provided with at least one current collector, and at least one of at least one current collector corresponding to the second end of the flow channel plate is provided with an energy absorption member.

18. A battery, comprising the battery box according to any of claims 12 to 17 and a battery cell, wherein the battery cell is disposed in the accommodation space and attached to the flow channel plate.

19. An electric device, wherein the electric device comprises the battery according to claim 18, and the battery is configured as a power source for the electric device.
